# EUROPÄISCHE PATENTSCHRIFT

(11) **EP 2 187 752 B1**
(45) Veröffentlichungstag und Bekanntmachung des Hinweises auf die Patenterteilung: **11.02.2015**
(21) Anmeldenummer: 08802120.9
(22) Anmeldetag: 12.09.2008
(51) Int. Cl.: A22C 17/00

(54) **FETTAUFLAGENABTRENNUNGSEINRICHTUNG UND -VERFAHREN**
FAT LAYER TRIMMING DEVICE AND METHOD
DISPOSITIF ET MÉTHODE DE DÉCOUPE DE GRAISSES DE COUVERTURE

(30) Priorität: 24.10.2007 DE 102007050857
(43) Veröffentlichungstag der Anmeldung: 26.05.2010
(73) Patentinhaber: Weber Maschinenbau GmbH Breidenbach, 35236 Breidenbach (DE)
(72) Erfinder: WEBER, Günther, 17094 Gross Nemerow (DE)
(74) Vertreter: Manitz, Finsterwald & Partner GbR
(86) Internationale Anmeldenummer: PCT/EP2008/007567
(87) Internationale Veröffentlichungsnummer: WO 2009/052905

(56) Entgegenhaltungen:
- EP-A- 0 324 522
- EP-A- 0 848 308
- WO-A-2004/106020
- WO-A-2006/136814
- US-A- 5 937 080

## Beschreibung

Die Erfindung betrifft eine Vorrichtung gemäß dem Oberbegriff des Anspruchs 1, sowie ein Verfahren gemäß Anspruch 10.

Fleischprodukte bestehen im Wesentlichen aus drei Bestandteilen, nämlich Schwarte, Fett und Edelfleisch. In der Fleisch verarbeitenden Industrie werden zu verarbeitende Fleischstücke je nach Anforderung in diese drei Bestandteile zerlegt.

Um die Schwarte und das Fett, d.h. also die Fettauflage, in einem automatisierten Prozess von dem Edelfleischbestandteil eines Fleischprodukts trennen zu können, ist es erforderlich, die Stärke der Fettauflage, mit anderen Worten also deren Dicke oder Höhe, zu kennen. Bekannte Vermessungseinrichtungen sehen zur Ermittlung der Stärke einer Fettauflage eines Fleischprodukts einen Sensor vor, welcher in das Produkt eingestochen wird und während des Einstechens die Umgebungshelligkeit erfasst. Durch eine Auswertung der während des Einstechens auftretenden und durch den Sensor erfassten unterschiedlichen Helligkeitswerte kann auf die Konsistenz des von dem Sensor durchstoßenen Materials geschlossen oder zumindest eine Änderung der Konsistenz detektiert werden, woraus sich letztlich die Stärke einer Fettauflage ermitteln lässt.

Nachteilig ist hierbei, dass das Fleischprodukt durch das Einstechen des Sensors beschädigt wird, insbesondere da der Sensor für eine zuverlässige Ermittlung der Stärke der Fettauflage an mehreren Stellen des Produkts eingestochen werden muss oder mehrere verteilt angeordnete Sensoren gleichzeitig in das Produkt eingestochen werden müssen.

Eine Vorrichtung gemäß dem Oberbegriff des Anspruchs 1 ist aus der WO 2004/106020 A1 bekannt. Weitere Schneidvorrichtungen mit berührungsloser Ermittlung der Stärke einer Fettauflage eines einen Edelfleischbestandteil und eine Fettauflage umfassenden Fleischprodukts sind in US 5,937,080 A, WO 2006/136814 A1, EP 0 324 522 A1 und EP 0 848 308 A beschrieben.

Der Erfindung liegt die Aufgabe zugrunde, eine Vorrichtung zu schaffen, die eine Abtrennung einer Fettauflage von einem Edelfleischbestandteil eines Fleischprodukts mit einem geringeren wirtschaftlichen Aufwand ermöglicht.

Zur Lösung der Aufgabe sind eine Vorrichtung mit den Merkmalen des Anspruchs 1, sowie ein Verfahren gemäß Anspruch 10 vorgesehen.

Die Kopplung der Schneideinrichtung mit der Vermessungseinrichtung ermöglicht eine vollständig automatisierte Abtrennung der Fettauflage von dem Edelfleischbestandteil des Fleischprodukts. Insbesondere ist keine manuelle Vermessung der Fettauflage oder manuelle Anpassung der Schneideinrichtung an die gemessene Fettauflagenstärke erforderlich, da sowohl die Bestimmung der Fettauflagenstärke als auch die entsprechende Einstellung der Schneideinrichtung automatisch erfolgt. Letztlich ermöglicht dies eine Abtrennung einer Fettauflage von einem Edelfleischbestandteil eines Fleischprodukts mit einem signifikant geringeren wirtschaftlichen Aufwand.

Dadurch, dass die Ermittlung der Fettauflagenstärke berührungslos erfolgt, lässt sich die Fettauflage von dem Edelfleischbestandteil trennen, ohne dass die Fettauflage und/oder der Edelfleischbestandteil dabei eingestochen oder eingeschnitten oder anderweitig beschädigt wird.

Die Schneideinrichtung umfasst ein Schneidmesser, insbesondere einen Messerbalken, dessen Lage und insbesondere Höhe relativ zu einer Produktauflage variierbar ist. Auf diese Weise lassen sich die Schneideinrichtung und insbesondere die Schneidmesserposition an unterschiedlich starke Fettauflagen anpassen, bzw. es kann die Dicke eingestellt werden, mit welcher die Fettauflage von dem Edelfleischbestandteil abgetrennt wird.

Die Schneideinrichtung weist eine Steuereinheit zur Steuerung des Betriebs des Schneidmessers in Abhängigkeit von den durch die Vermessungseinrichtung ermittelten Messdaten auf.

Außerdem ist ein Verfahrprofil in der Steuereinrichtung abgespeichert, gemäß dem die Lage und insbesondere die Höhe des Schneidmessers relativ zu einer Produktauflage in Abhängigkeit von einem Produktvorschub einzustellen ist. Das Fahrprofil ermöglicht es, sozusagen die Anatomie des Fleischprodukts bei der Abtrennung der Fettauflage von dem Edelfleischbestandteil zu berücksichtigen und mit dem Schneidmesser dem natürlichen, also anatomiebedingten Verlauf der Fettauflage zu folgen.

Wie bereits erwähnt erfolgt die Ermittlung der Stärke der Fettauflage optisch. Die Vermessungseinrichtung kann zu diesem Zweck einen Lichtdetektor zum Detektieren von an dem Fleischprodukt reflektiertem Licht aufweisen. Der Lichtdetektor kann eine Kamera, beispielsweise eine CCD-Kamera, umfassen, deren Blickwinkel vorzugsweise so groß gewählt ist, dass ein Bereich des Fleischprodukts erfasst wird, welcher eine Grenzfläche zwischen der Fettauflage und dem Edelfleischbestandteil umfasst. Anhand der ermittelten Reflektivität der durch den Lichtdetektor erfassten Bereiche des Fleischprodukts lässt sich auf die Konsistenz des erfassten Produktmaterials schließen, so dass ein Übergang von einem Bestandteil zu einem anderen Bestandteil des Fleischprodukts erkannt werden kann oder sogar unterschiedliche Bestandteile des Fleischprodukts und insbesondere die Fettauflage des Fleischprodukts identifiziert werden können, woraus letztlich die Stärke der Fettauflage ermittelbar ist.

Zur Verbesserung des Detektionsergebnisses kann eine einen Bereich des Fleischprodukts und insbesondere den durch den Lichtdetektor erfassten Bereich ausleuchtende Lichtquelle vorgesehen sein. Gemäß einer bevorzugten Ausführungsform umfasst die Lichtquelle wenigstens eine Leuchtdiode, insbesondere eine im blauen Wellenlängenbereich emittierende Leuchtdiode. Da sich die Reflexionseigenschaften der Fett- und Edelfleischbestandteile eines Fleischprodukts insbesondere im blauen Wellenlängenbereich deutlich voneinander unterscheiden, ermöglicht die Verwendung von blauem Licht eine besonders zuverlässige Ermittlung der Fettauflagenstärke.

Gemäß einer Ausführungsform ist eine Transporteinrichtung vorgesehen, um das Fleischprodukt, insbesondere kontinuierlich, durch die Vermessungseinrichtung hindurch zu transportieren. Auf diese Weise kann die Vermessung des Fleischprodukts leicht in einen Prozess zur Verarbeitung des Fleischprodukts integriert werden. Bevorzugt umfasst die Transporteinrichtung ein Fördermittel, welches dazu vorgesehen ist, das Fleischprodukt einer Schneideinrichtung zur Abtrennung der Fettauflage von dem Edelfleischbestandteil zuzuführen.

Vorteilhafterweise sind der Lichtdetektor und die Lichtquelle in Transportrichtung gesehen seitlich neben der Transporteinrichtung angeordnet.

Weiterer Gegenstand der Erfindung ist ferner ein Verfahren zur Abtrennung einer Fettauflage eines Fleischprodukts von einem Edelfleischbestandteil des Fleischprodukts mit den Merkmalen des Anspruchs 10, durch welches sich die in Verbindung mit der Trennvorrichtung erläuterten Vorteile entsprechend erreichen lassen.

Gemäß einer bevorzugten Ausführungsform des Verfahrens wird zur Ermittlung der Stärke der Fettauflage lediglich ein Teilabschnitt des Fleischprodukts vermessen, insbesondere ein in einer Transportrichtung gesehen vorderer Teilabschnitt. Die Vermessung eines Teilabschnitts ermöglicht eine ausreichend genaue Vorhersage über den Verlauf der Fettauflage über die gesamte Ausdehnung des Fleischprodukts insbesondere bei solchen Fleischprodukten, bei denen der Fettauflagenverlauf von Produkt zu Produkt in bekannter Weise oder nur geringfügig variiert, da sich der vermessene Teilabschnitt einer von mehreren bekannten "Anatomien" des Fleischprodukts eindeutig zuordnen lässt. In Abhängigkeit von dem Messergebnis bzw. der zugeordneten "Anatomie" kann somit ein Schneidprogramm ausgewählt werden, durch welches sich die Fettauflage in der gewünschten Weise abtrennen lässt.

Alternativ oder zusätzlich kann der Verlauf der Fettauflage durch eine Vermessung des Fleischprodukts an charakteristischen Messpunkten und anschließende Inter- oder Extrapolation über das gesamte Fleischprodukt ermittelt werden. Dies ermöglicht zum einen eine Überprüfung, ob die "Anatomie" des Fleischprodukts aus der Vermessung eines Teilabschnitts korrekt bestimmt wurde sowie gegebenenfalls eine Modifikation des Schneidprogramms. Zum anderen lässt sich der Fettauflagenverlauf über die gesamte Ausdehnung des Fleischprodukts auch bei solchen Fleischprodukten ermitteln, bei denen der Verlauf der Fettauflage erfahrungsgemäß von Produkt zu Produkt so stark variiert, dass die Vermessung in einem Teilabschnitt zur genauen Ermittlung des Fettauflagenverlaufs nicht ausreicht.

Gemäß einer weiteren Ausführungsform werden die ermittelten Messwerte mit für das Fleischprodukt erfahrungsgemäß zu erwartenden Messwerten verglichen, und bei einer Abweichung der ermittelten von den zu erwartenden Messwerten wird eine Fehlermeldung angezeigt. Auf diese Weise können ungewöhnliche Produktabweichungen und/oder Fehlschnitte detektiert und gemeldet werden, wodurch sich insbesondere bei einer vollautomatischen Verarbeitung des Fleischprodukts eine Fehlverarbeitung des Produkts vermeiden lässt.

Wird zur Ermittlung der Fettauflagenstärke ein Kamerasystem verwendet, so lässt sich durch eine entsprechende Auswertung der aufgenommenen Kamerabilder und insbesondere durch einen Vergleich der aufgenommenen Kamerabilder mit statistischen Referenzbildern nicht nur feststellen, ob sich das Fleischprodukt in einer für eine weitere Verarbeitung korrekten Lage befindet, sondern auch, ob eine Verschmutzung des Kameraobjektivs vorliegt. Sollte ersteres oder letzteres der Fall sein, so kann eine entsprechende Fehlermeldung ausgegeben und eine Verarbeitung des Fleischprodukts gegebenenfalls gestoppt werden, um Fehlverarbeitungen des Fleischprodukts zu vermeiden.

Nachfolgend wird die Erfindung rein beispielhaft anhand einer vorteilhaften Ausführungsform unter Bezugnahme auf die beigefügte Zeichnung beschrieben. Es zeigen:
- Fig. 1: eine erfindungsgemäße Vorrichtung zur Abtrennung einer Fettauflage eines Fleischprodukts von einem Edelfleischbestandteil des Fleischprodukts mit einer Vermessungseinrichtung und einer Schneideinrichtung; und
- Fig. 2: eine perspektivische Ansicht der Vermessungseinrichtung von Fig. 1.

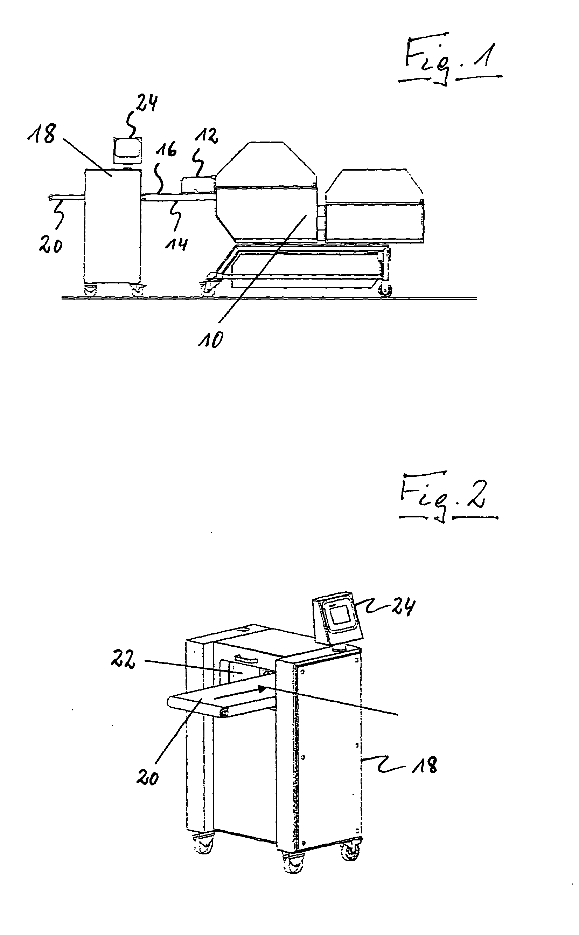

Die in Fig. 1 dargestellte Vorrichtung umfasst eine Schneideinrichtung 10 zur Abtrennung einer Fettauflage von einem Edelfleischbestandteil eines Fleischprodukts 12. Eine derartige Schneideinrichtung 10 wird auch als Entschwartungs- oder Entfettungsmaschine bezeichnet.

Das Fleischprodukt 12 wird der Schneideinrichtung 10 mittels einer Transporteinrichtung zugeführt, die zu diesem Zweck ein erstes Förderband 14 aufweist. Eine Oberseite 16 des ersten Förderbands 14 definiert eine Auflageebene für das Fleischprodukt 12.

Die Schneideinrichtung 10 umfasst in an sich bekannter Weise einen in der Figur nicht dargestellten Messerbalken zum Abtrennen der Fettauflage. Die Lage des Messerbalkens relativ zu dem ersten Förderband 14 und insbesondere die Höhe des Messerbalkens über der Oberseite 16 des ersten Förderbands 14 ist je nach Dicke der abzutrennenden Fettauflagenschicht bzw. Dicke der Fettauflagenschicht, die an dem Edelfleischbestandteil verbleiben soll, einstellbar.

Um eine vollautomatische Entfettung bzw. Entschwartung des Fleischprodukts 12 zu ermöglichen, ist der Schneideinrichtung 10 in Transport- bzw. Zuführrichtung des Fleischprodukts 12 gesehen eine Vermessungseinrichtung 18 zur Vermessung des Fleischprodukts 12 vorgelagert.

Die Vermessung des Fleischprodukts 12 erfolgt in einem kontinuierlichen Durchlaufprozess, während sich das Fleischprodukt 12 durch die Vermessungseinrichtung 18 hindurch bewegt. Für den Transport des Fleischprodukts 12 durch die Vermessungseinrichtung 18 ist ein sich an das erste Förderband 14 anschließendes zweites Förderband 20 vorgesehen, welches ebenfalls Teil der bereits genannten Transporteinrichtung ist.

Bei der Vermessung des Fleischprodukts 12 handelt es sich um eine berührungslose, optische Vermessung. Zu diesem Zweck sind hinter einem seitlich neben dem zweiten Förderband 20 angeordneten Sichtfenster 22 eine LED-Beleuchtung und eine Kamera, beispielsweise eine CCD-Kamera, vorgesehen.

Die LED-Beleuchtung umfasst wenigstens eine im blauen Wellenlängenbereich emittierende Leuchtdiode und ist so ausgebildet, dass sie einen zumindest die Fettauflage des Fleischprodukts 12 umfassenden Teilbereich des Fleischprodukts 12 ausleuchtet. Die Verwendung von blauem Licht ist besonders vorteilhaft, weil der Kontrast zwischen Edelfleisch und Fettauflage unter blauem Licht besonders deutlich ausfällt, so dass der Verlauf der Grenze zwischen Edelfleisch und Fettauflage besonders gut zu erkennen ist.

Mittels der Kamera werden Bilder des durch die LED-Beleuchtung ausgeleuchteten Bereichs des Fleischprodukts 12 aufgenommen. Die aufgenommenen Bilder werden in einer Auswerteeinheit ausgewertet, um die Stärke der Fettauflage, mit anderen Worten also die Dicke von Fett und Schwarte, zu ermitteln.

Zusätzlich kann durch einen Vergleich der aufgenommenen Bilder mit in der Auswerteeinheit hinterlegten statistischen Referenzbildern festgestellt werden, ob das Fleischprodukt 12 sich in einer für die Verarbeitung in der Schneideinrichtung 10 richtigen Lage befindet, d.h. also korrekt ausgerichtet ist, und/oder ob eine Verschmutzung eines Kameraobjektivs und/oder des Sichtfensters 22 vorliegt.

Bei einer detektierten Fehlausrichtung des Fleischprodukts 12 oder Verschmutzung des Sichtfensters 22 kann eine optische und/oder akustische Fehlermeldung über ein mit der Auswerteeinheit verbundenes Ausgabemittel 24 angezeigt werden, damit ein Bediener der Vorrichtung entsprechende Maßnahmen zur Behebung des Fehlers bzw. der Fehler ergreifen kann. Alternativ oder zusätzlich kann die Auswerteeinheit in einem solchen Fall auch das zweite Förderband 20 und/oder das erste Förderband 14 anhalten, um eine fehlerhafte Weiterverarbeitung des Fleischprodukts 12 zu verhindern.

Grundsätzlich ist es möglich, das Fleischprodukt 12 über seine in Transportrichtung gesehen gesamte Länge zu vermessen. Angesichts der dabei anfallenden Datenmengen ist es jedoch günstiger, lediglich einen Teilabschnitt des Fleischprodukts 12, beispielsweise einen in Transportrichtung gesehenen vorderen Teilabschnitt, zu vermessen.

Konkret kann die Vermessung des Fleischprodukts 12 beispielsweise so erfolgen, dass mehrere, z.B. 10 bis 20, Lichtblitze in kurzen zeitlichen Abständen von z.B. einigen 10 ms durch die LED-Beleuchtung kurz nacheinander ausgesandt werden, während sich das Fleischprodukt 12 an dem Sichtfenster 22 vorbei bewegt. Aus den den jeweiligen Lichtblitzen zugeordneten Kamerabildern wird jeweils ein Wert für die Stärke der Fettauflage ermittelt, und aus diesen ermittelten Werten wird ein Mittelwert errechnet, welcher als tatsächlicher Wert der Fettauflagenstärke in dem erfassten Bereich angesehen wird.

Grundsätzlich ist es ausreichend, diesen Messvorgang nur einmal pro Fleischprodukt 12 durchzuführen. Wird der Messvorgang über eine Länge des Fleischprodukts 12 von mehreren Zentimetern, z.B. 10 bis 15 cm, jedoch mehrmals durchgeführt, so lässt sich die tatsächliche Stärke der Fettauflage mit einer höheren Genauigkeit ermitteln bzw. bereits ein Hinweis auf den Verlauf der Fettauflage gewinnen.

Grundsätzlich kann davon ausgegangen werden, dass sich der Verlauf der Fettauflage bei gleichartigen Fleischprodukten 12 bedingt durch die Anatomie des Fleischprodukts nicht signifikant ändert, so dass es bei Kenntnis der Anatomie des Fleischprodukts 12 ausreicht, einen Teilabschnitt des Fleischprodukts 12, z.B. einen vorderen Abschnitt, zu vermessen, um daraus den Verlauf der Fettauflage und insbesondere deren Stärke über das gesamte Fleischprodukt 12 hinweg vorherzusagen. Die Vermessung des Teilbereichs ermöglicht somit eine eindeutige Bestimmung des Verlaufs der Fettauflage.

Die durch die Vermessungseinrichtung 18 in dem Teilabschnitt ermittelte Stärke der Fettauflage wird von der Auswerteeinheit der Vermessungseinrichtung 18 an eine Steuereinheit der Schneideinrichtung 10 übermittelt, welche aus dem Messergebnis die Anatomie des Fleischprodukts 12 ermittelt.

In der Steuereinheit der Schneideinrichtung 10 sind produkt- bzw. anatomieabhängige Verfahrprofile hinterlegt, welche unter Berücksichtigung der ermittelten Anatomie des jeweils zu verarbeitenden Fleischprodukts 12 eine Veränderung der Einstellung des Messerbalkens in Abhängigkeit von dem Vorschub des zu verarbeitenden Fleischprodukts 12 bewirken.

Anhand des Messergebnisses bzw. der ermittelten Anatomie des Fleischprodukts 12 wählt die Steuereinrichtung ein geeignetes Verfahrprofil aus, durch welches die Höhe des Messerbalkens in Abhängigkeit von der Stärke und dem Verlauf der Fettauflage und in Abhängigkeit von dem Produktvorschub so eingestellt wird, dass eine Fettauflagenschicht einer gewünschten Dicke von dem Fleischprodukt 12 abgetrennt wird bzw. dass eine Fettauflagenschicht einer gewünschten Dicke an dem Edelfleischbestandteil des Fleischprodukts 12 verbleibt.

Werden Fleischprodukte 12 verarbeitet, die sich z.B. stärker voneinander unterscheiden, so ist es auch möglich, den Verlauf der Fettauflage durch eine Vermessung des Fleischprodukts 12 an mehreren, insbesondere über die Länge des Fleischprodukts 12 verteilt angeordneten, charakteristischen Messpunkten sowie durch eine anschließende Inter- oder Extrapolation des Messergebnisses über das gesamte Fleischprodukt 12 hinweg zu ermitteln.

Der so ermittelte Verlauf der Fettauflage wird wiederum von der Auswerteeinheit der Vermessungseinrichtung 18 an die Steuereinheit der Schneideinrichtung 10 übermittelt, damit diese die Höhe des Messerbalkens in Abhängigkeit von dem ermittelten Verlauf der Fettauflage und in Abhängigkeit von dem Produktvorschub so einstellen kann, dass eine Fettauflagenschicht einer gewünschten Dicke von dem Fleischprodukt 12 abgetrennt wird bzw. dass eine Fettauflagenschicht einer gewünschten Dicke an dem Edelfleischbestandteil des Fleischprodukts 12 verbleibt.

Gegebenenfalls kann die Vermessung des Fleischprodukts 12 an mehreren, insbesondere über die Länge des Fleischprodukts 12 verteilt angeordneten, charakteristischen Messpunkten und die anschließende Inter-oder Extrapolation des Messergebnisses über das gesamte Fleischprodukt 12 hinweg dazu verwendet werden, nicht nur anstelle eines abgespeicherten Verfahrprofils, sondern zusätzlich zu einem abgespeicherten Verfahrprofil, gewissermaßen in Form einer Feineinstellung, die Einstellung des Messerbalkens zu steuern.

Im Ergebnis ermöglicht die erfindungsgemäße Vorrichtung eine vollautomatische Abtrennung einer Fettauflage von einem Edelfleischbestandteil eines Fleischprodukts 12, wobei durch die erwähnte Fehlererkennung eine Fehlverarbeitung des Fleischprodukts 12 vermieden und somit die Prozesssicherheit erhöht wird und außerdem durch die berührungslose Vermessung des Fleischprodukts 12 ein Einstechen oder Einschneiden der Fettauflage und/oder des Edelfleischbestandteils vermieden wird.

### Bezugszeichenliste

- 10: Schneideinrichtung
- 12: Fleischprodukt
- 14: erstes Förderband
- 16: Oberseite
- 18: Vermessungseinrichtung
- 20: zweites Förderband
- 22: Sichtfenster
- 24: Ausgabemittel

## Patentansprüche

1. Vorrichtung zur Abtrennung einer Fettauflage eines Fleischprodukts (12) von einem Edelfleischbestandteil des Fleischprodukts (12) mit einer Vermessungseinrichtung (18) zur automatischen und berührungslosen Ermittlung der Stärke der Fettauflage und einer mit der Vermessungseinrichtung (18) gekoppelten Schneideinrichtung (10) zur automatischen Abtrennung der Fettauflage von dem Edelfleischbestandteil in Abhängigkeit von den durch die Vermessungseinrichtung (18) ermittelten Messdaten,
wobei die Schneideinrichtung (10) ein Schneidmesser, dessen Lage und insbesondere Höhe relativ zu einer Produktauflage variierbar ist, und eine Steuereinheit zur Steuerung der Lage bzw. Höhe des Schneidmessers in Abhängigkeit von den durch die Vermessungseinrichtung (18) ermittelten Messdaten aufweist, **dadurch gekennzeichnet, dass**
wenigstens ein Verfahrprofil in der Steuereinheit abgespeichert ist, gemäß dem die Lage und insbesondere die Höhe des Schneidmessers relativ zu einer Produktauflage in Abhängigkeit von einem Produktvorschub einzustellen ist.

2. Vorrichtung nach Anspruch 1,
**dadurch gekennzeichnet, dass**
die Ermittlung der Stärke der Fettauflage optisch erfolgt.

3. Vorrichtung nach Anspruch 1 oder 2,
**gekennzeichnet durch**
einen Lichtdetektor, insbesondere eine Kamera, zum Detektieren von an dem Fleischprodukt (12) reflektiertem Licht.

4. Vorrichtung nach einem der vorherigen Ansprüche,
**gekennzeichnet durch**
eine einen Bereich des Fleischprodukts (12) ausleuchtende Lichtquelle.

5. Vorrichtung nach Anspruch 4,
**dadurch gekennzeichnet, dass**
die Lichtquelle wenigstens eine Leuchtdiode, insbesondere eine im blauen Wellenlängenbereich emittierende Leuchtdiode, umfasst.

6. Vorrichtung nach einem der vorherigen Ansprüche,
**dadurch gekennzeichnet, dass**
eine Transporteinrichtung (20) vorgesehen ist, um das Fleischprodukt (12), insbesondere kontinuierlich, durch die Vermessungseinrichtung (18) hindurch zu transportieren.

7. Vorrichtung nach Anspruch 6,
**dadurch gekennzeichnet, dass**
eine Lichtquelle und ein Lichtdetektor in Transportrichtung gesehen seitlich neben der Transporteinrichtung (20) angeordnet sind.

8. Vorrichtung nach einem der vorherigen Ansprüche,
**dadurch gekennzeichnet, dass**
eine Transporteinrichtung (14, 20) vorgesehen ist, um das Fleischprodukt (12), insbesondere kontinuierlich, durch die Vermessungseinrichtung (18) hindurch zu transportieren und der Schneideinrichtung (10) zuzuführen.

9. Vorrichtung nach einem der vorherigen Ansprüche,
**dadurch gekennzeichnet, dass**
die Schneideinrichtung (10) einen Messerbalken umfasst.

10. Verfahren zur Abtrennung einer Fettauflage eines Fleischprodukts (12) von einem Edelfleischbestandteil des Fleischprodukts (12), bei dem die Stärke der Fettauflage berührungslos ermittelt wird und die Fettauflage mittels eines Schneidmessers in Abhängigkeit von der ermittelten Stärke der Fettauflage von dem Edelfleischbestandteil abgetrennt wird,
**dadurch gekennzeichnet, dass**
die Lage und insbesondere die Höhe des Schneidmessers relativ zu einer Produktauflage in Abhängigkeit von einem Produktvorschub und gemäß einem in einer Steuereinheit abgespeicherten Verfahrprofil eingestellt wird.

11. Verfahren nach Anspruch 10,
**dadurch gekennzeichnet, dass**
zur Ermittlung der Stärke der Fettauflage lediglich ein Teilabschnitt des Fleischprodukts (12) vermessen wird, insbesondere ein in einer Transportrichtung gesehen vorderer Teilabschnitt, und in Abhängigkeit von dem Messergebnis das abgespeicherte Verfahrprofil ausgewählt wird.

12. Verfahren nach Anspruch 10 oder 11,
**dadurch gekennzeichnet, dass**
die Stärke der Fettauflage mittels optischer Vermessung ermittelt wird.

13. Verfahren nach einem der Ansprüche 10 bis 12,
**dadurch gekennzeichnet, dass**
die Stärke der Fettauflage während einer, insbesondere kontinuierlichen, Transportbewegung des Fleischprodukts (12) ermittelt wird.

14. Verfahren nach einem der Ansprüche 10 bis 13,
**dadurch gekennzeichnet, dass**
der Verlauf der Fettauflage über das gesamte Fleischprodukt (12) durch eine Vermessung des Fleischprodukts (12) an charakteristischen Messpunkten und anschließende Inter- oder Extrapolation ermittelt wird.

15. Verfahren nach einem der Ansprüche 10 bis 14,
**dadurch gekennzeichnet, dass**
die ermittelten Messwerte mit für das Fleischprodukt (12) erfahrungsgemäß zu erwartenden Messwerten verglichen werden und bei einer Abweichung der ermittelten von den zu erwartenden Messwerten eine Fehlermeldung angezeigt wird.

## Claims

1. An apparatus for cutting off a fat cover from a meat product (12) from a flesh component of the meat product (12) having a measurement device (18) for the automatic and contactless determination of the thickness of the fat cover and having a cutting device (10) coupled to the measurement device (18) for the automatic cutting off of the fat cover from the flesh component in dependence on the measured data determined by the measurement device (18),
wherein the cutting device (10) comprises a cutting blade whose position, and in particular whose height, is variable relative to a product support and has a control unit for the control of the position or height of the cutting blade in dependence on the measured data determined by the measurement device (18), **characterized in that**
at least one travel profile is stored in the control unit in accordance with which the position and in particular the height of the cutting blade relative to a product support is to be set in dependence on a product feed.

2. An apparatus in accordance with claim 1,
**characterized in that**
the thickness of the fat cover takes place optically.

3. An apparatus in accordance with claim 1 or claim 2,
**characterized by**
a light detector, in particular a camera, for the detection of light reflected at the meat product (12).

4. An apparatus in accordance with any one of the preceding claims,
**characterized by**
a light source illuminating a region of the meat product (12).

5. An apparatus in accordance with claim 4,
**characterized in that**
the light source comprises at least one light emitting diode, in particular a light emitting diode emitting in the blue wavelength spectrum.

6. An apparatus in accordance with any one of the preceding claims,
**characterized in that**
a transport device (20) is provided to transport the meat product (12), in particular continuously, through the measurement device (18).

7. An apparatus in accordance with claim 6,
**characterized in that**
a light source and a light detector are arranged laterally next to the transport device (20), viewed in the transport direction.

8. An apparatus in accordance with any one of the preceding claims,
**characterized in that**
a transport device (14, 20) is provided to transport the meat product (12), in particular continuously, through the measurement device (18) and to supply it to the cutting device (10).

9. An apparatus in accordance with any one of the preceding claims,
**characterized in that**
the cutting device (10) comprises a cutter bar.

10. A method for cutting off a fat cover from a meat product (12) from a flesh component of the meat product (12), wherein the thickness of the fat cover is determined in a contactless manner and the fat cover is cut off from the flesh component by means of a cutting blade in dependence on the determined thickness of the fat cover,
**characterized in that**
the position, and in particular the height, of the cutting blade relative to a product support is set in dependence on a product feed and in accordance with a travel profile stored in a control unit.

11. A method in accordance with claim 10,
**characterized in that**
only a part section of the meat product (12), in particular a front part section viewed in a transport direction, is measured for the determination of the thickness of the fat cover and the stored travel profile is selected in dependence on the measured result.

12. A method in accordance with claim 10 or claim 11,
**characterized in that**
the thickness of the fat cover is determined by means of an optical measurement.

13. A method in accordance with any one of the claims 10 to 12,
**characterized in that**
the thickness of the fat cover is determined during a transport movement, in particular a continuous transport movement, of the meat product (12).

14. A method in accordance with any one of the claims 10 to 13,
**characterized in that**
the shape of the fat cover is determined over the total meat product (12) by a measurement of the meat product (12) at characteristic measurement points and by subsequent interpolation or extrapolation.

15. A method in accordance with any one of the claims 10 to 14,
**characterized in that**
the determined measured values are compared with measured values experience has shown are to be expected for the meat product (12) and an error message is displayed on a deviation of the determined measured values from the measured values to be expected.

## Revendications

1. Appareil pour séparer une couche externe de graisse d'un produit camé (12) vis-à-vis de la part de viande maigre du produit camé (12), comprenant un système de mesure (18) pour la détermination automatique et sans contact de l'épaisseur de la couche de graisse, et un système de coupe (10) couplé au système de mesure (18) pour séparer automatiquement la couche de graisse vis-à-vis de la part de viande maigre en fonction des données de mesure déterminées par le système de mesure (18),
dans lequel le système de coupe (10) comprend un couteau de coupe, dont la situation et en particulier la hauteur par rapport à un support de produit est variable, et une unité de commande pour commander la situation ou la hauteur du couteau de coupe en fonction des données de mesure déterminées par le système de mesure (18),
**caractérisé en ce qu'**au moins un profil de déplacement est mémorisé dans l'unité de commande, profil d'après lequel la situation et en particulier la hauteur du couteau de coupe doit être réglée par rapport à un support de produit en fonction de l'avance du produit.

2. Appareil selon la revendication 1,
**caractérisé en ce que** la détermination de l'épaisseur de la couche de graisse a lieu de manière optique.

3. Appareil selon la revendication 1 ou 2,
**caractérisé par** un détecteur de lumière, en particulier une caméra, pour détecter la lumière réfléchie sur le produit camé (12).

4. Appareil selon l'une des revendications précédentes,
**caractérisé par** une source de lumière éclairant une zone du produit camé (12).

5. Appareil selon la revendication 4,
**caractérisé en ce que** la source de lumière inclut au moins une diode électroluminescente, en particulier une diode électroluminescente émettant dans une plage des longueurs d'onde bleues.

6. Appareil selon l'une des revendications précédentes,
**caractérisé en ce qu'**il est prévu un moyen de transport (20) pour transporter le produit carné (12) à travers le système de mesure (18), en particulier en continu.

7. Appareil selon la revendication 6,
**caractérisé en ce qu'**une source de lumière et un détecteur de lumière sont agencés, vus en direction de transport, latéralement à côté du moyen de transport (20).

8. Appareil selon l'une des revendications précédentes,
**caractérisé en ce qu'**il est prévu un moyen de transport (14, 20) pour transporter le produit camé (12) à travers le système de mesure (18), en particulier en continu, et pour l'amener au système de coupe (10).

9. Appareil selon l'une des revendications précédentes,
**caractérisé en ce que** le système de coupe (10) inclut une barre de coupe.

10. Procédé pour séparer une couche externe de graisse d'un produit carné (12) vis-à-vis d'une part de viande maigre du produit carné (12), dans lequel on détermine sans contact l'épaisseur de la couche de graisse et on sépare la couche de graisse vis-à-vis de la part de viande maigre au moyen d'un couteau de coupe en fonction de l'épaisseur déterminée de la couche de graisse,
**caractérisé en ce que**
la situation et en particulier la hauteur du couteau de coupe par rapport à un support de produit est réglée en fonction d'une avance du produit et selon un profil de déplacement mémorisé dans une unité de commande.

11. Procédé selon la revendication 10,
**caractérisé en ce que**, pour déterminer l'épaisseur de la couche de graisse, en mesure uniquement une portion partielle du produit camé (12), en particulier une portion partielle antérieure vue en direction de transport, et on sélectionne le profil de déplacement mémorisé en fonction du résultat de mesure.

12. Procédé selon la revendication 10 ou 11,
**caractérisé en ce que** l'épaisseur de la couche de graisse est déterminée au moyen d'une mesure optique.

13. Procédé selon l'une des revendications 10 à 12,
**caractérisé en ce que** l'épaisseur de la couche de graisse est déterminée pendant un mouvement de transport du produit camé (12), en particulier en continu.

14. Procédé selon l'une des revendications 10 à 13,
**caractérisé en ce que** le profil de la couche de graisse est déterminé sur la totalité du produit camé (12) par une mesure du produit camé (12) au niveau de points de mesure caractéristiques avec interpolation ou extrapolation successive.

15. Procédé selon l'une des revendications 10 à 14,
**caractérisé en ce que** les valeurs de mesure déterminées sont comparées avec des valeurs de mesure attendues conformément à l'expérience pour le produit carné (12) et, en cas de divergence des valeurs de mesure déterminées par rapport aux valeurs de mesure attendues, on affiche un message d'erreur.
